# EUROPÄISCHE PATENTSCHRIFT

(11) **EP 1 428 722 B1**
(45) Veröffentlichungstag und Bekanntmachung des Hinweises auf die Patenterteilung: **25.07.2007**
(21) Anmeldenummer: 03103650.2
(22) Anmeldetag: 02.10.2003
(51) Int. Cl.: B60Q 1/48

(54) **Verfahren zur Ermittlung einer geeigneten Parklücke**
Method for identifying an appropriate parking place
Procédé d'identification d'une place adéquate de stationnement

(30) Priorität: 13.12.2002 DE 10258310
(43) Veröffentlichungstag der Anmeldung: 16.06.2004
(73) Patentinhaber: ROBERT BOSCH GMBH, 70442 Stuttgart (DE)
(72) Erfinder: Beutnagel-Buchner, Uwe, 70186 Stuttgart (DE); Danz, Christian, 70469 Stuttgart (DE); Uhler, Werner, 76646 Bruchsal (DE)

(56) Entgegenhaltungen:
- EP-A- 0 735 383
- US-A- 4 931 930
- US-B1- 6 265 968
- US-B1- 6 424 895

## Beschreibung

### Stand der Technik

Die Erfindung geht aus von einem Verfahren zur Ermittlung einer geeigneten Parklücke nach der Gattung des Hauptanspruchs siehe z.B. US-B-6 265 968. Viele Fahrzeugführer sind sich bei einer Parkplatzsuche nicht sicher, ob ihr Fahrzeug in eine Parklücke hineinpasst, die durch abgestellte Kraftfahrzeuge oder andere, fest am Boden verankerte Hindernisse gebildet wird. Hierzu sind automatische Parklückenvermessungssysteme bekannt, die die Länge der Parklücke mittels einer Abstandsmessung bestimmen. Dem Fahrer wird angezeigt, ob sein Fahrzeug in die Lücke passt. Diese Funktion ist sowohl für die rechte als auch für die linke Straßenseite denkbar. Eine Verwendung der Funktion ist jedoch nur dann sinnvoll, wenn der Fahrer tatsächlich sein Fahrzeug abstellen will. Daher ist es vorgesehen, dass die Parklückenvermessung von einem Benutzer manuell aktiviert werden muss. Zusätzlich ist eine Seitenauswahl zu treffen, die z.B. über die Auswahl der Seite getroffen wird, zu der ein Blinker gesetzt wird. Nachteilig hierbei ist jedoch, dass durch das fortwährende Blinken während der Parklückensuche und der Parklückenvermessung möglicherweise die Führer nachfolgender Kraftfahrzeuge irritiert werden können, insbesondere wenn sich das Fahrzeug mit einer normalen Verkehrsgeschwindigkeit weiterhin fortbewegt. Ferner kann eine Seitenauswahl mittels eines zusätzlichen Schalters gegeben werden, der jedoch ein zusätzliches Bedienelement erfordert, das bei dem ohnehin begrenzten Platzangebot von Bedienelemente in einem Fahrzeug für den Fahrer hinderlich ist.

### Vorteile der Erfindung

Das erfmdungsgemäße Verfahren mit den Merkmalen des Hauptanspruchs hat demgegenüber den Vorteil, dass eine Seitenauswahl bei der Parklückenvermessung automatisch erfolgt. Hierzu werden Sensorsignale ausgewertet, so dass anhand einer beidseitig durchgeführten Abstandsmessung zu das Fahrzeug umgebenden Hindernissen diejenige Fahrzeugseite ausgewählt wird, an der am wahrscheinlichsten ein Einparkvorgang erfolgen wird. Eine weitere Auswahl mittels eines Schalters oder eine Seitenvorgabe mittels einer Blinkerrichtung kann somit entfallen.

Durch die in den Unteransprüchen aufgeführten Maßnahmen sind vorteilhafte Weiterbildungen und Verbesserungen des im Hauptanspruch angegeben Verfahrens möglich. Besonders vorteilhaft ist, von den Fahrzeugseiten, insbesondere von der rechten oder linken Fahrzeugseite, diejenige Fahrzeugseite auszuwählen, die einen geringeren Abstand zu Hindernissen an einem Straßenrand aufweist. Denn außer bei sehr schmalen, einspurigen Straßen wird ein Fahrer im allgemeinen sich mit seiner Fahrposition an derjenigen Straßenseite orientieren, an der er einparken will, schon um dem nachfolgenden Verkehr die Gelegenheit zu geben, das eigene Fahrzeug sicher passieren zu können. Zudem ermöglicht die größere Annäherung eine genauere Vermessung der Parklücke, da der Messabstand insgesamt verringert wird. Die Straßenseite, der der Fahrer sich dabei besonders annähert, ist damit diejenige Seite, an der er wahrscheinlich einparken will.

Ferner ist vorteilhaft, über geeignete, nach vorne ausgerichtete Sensoren möglichen Gegenverkehr zu detektieren und dabei ebenso die Fahrzeugseite, an der der Gegenverkehr am eigenen Fahrzeug vorbeifährt. Insbesondere ein seitliches Heranfahren in eine Parktasche auf der Gegenseite ist im allgemeinen nicht erlaubt. Eine Ausnahme hierfür bilden Einbahnstraßen, in denen jedoch kein Gegenverkehr auftreten kann.

Durch eine Benutzereingabe zum Start der Seitenauswahl und/oder einer Parklückenvermessung wird erreicht, dass die Sensoren nicht ständig in Betrieb sein müssen, so dass ein unnötiges Abstrahlen von Sensorsignalen und die damit verbundene Leistungsaufnahme der mindestens einen Messvorrichtung zur Abstandsbestimmung vermieden wird.

Ferner ist vorteilhaft, dem Fahrer anzuzeigen, welche Fahrzeugseite für eine Parklückenvermessung ausgewählt wurde. Er hat hierdurch eine Rückkopplung darüber, ob eine von ihm gewünschte Messung auch zutreffend durchgeführt wird.

Ferner ist vorteilhaft, eine Auswerteeinheit vorzusehen, die sowohl der automatischen Festlegung der Fahrzeugsseite für die Parklückenvermessung, als auch der Auswertung der Sensordaten für die Parklückenvermessung selbst dient.

### Zeichnung

Ausführungsbeispiele der Erfindung sind in der Zeichnung dargestellt und in der nachfolgenden Beschreibung näher erläutert. Es zeigen
Figur 1 eine Aufsicht auf ein Kraftfahrzeug mit einer schematischen Darstellung von Sensoreinheiten, Auswerteeinheiten und Ausgabeeinheiten,
Figur 2 einen Straßenverlauf mit einem Kraftfahrzeug, bei dem das erfindungsgemäße Verfahren durchgeführt wird, in einem ersten Ausführungsbeispiel,
Figur 3 einen Straßenverlauf in Aufsicht mit einer Darstellung eines Kraftfahrzeugs bei der erfindungsgemäßen Durchführung des Verfahrens in einem zweiten Ausführungsbeispiel.

### Beschreibung des Ausführungsbeispiels

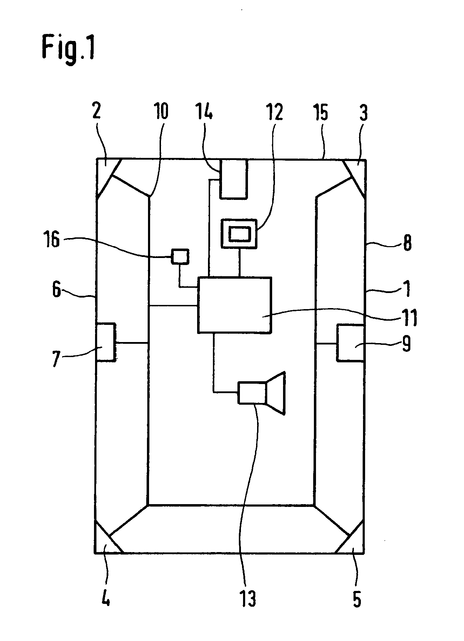

Das erfmdungsgemäße Verfahren kann für beliebige Fahrzeuge verwendet werden, ist jedoch besonders vorteilhaft bei Kraftfahrzeugen einsetzbar. In der Figur 1 ist ein Kraftfahrzeug 1 in Aufsicht dargestellt. An den Fahrzeugecken befmden sich jeweils Abstandssensoren 2, 3, 4, 5 die z.B. in einen Winkel von etwa 35°-90° sowohl gegen die Fahrzeugseiten als auch gegen die Fahrzeugfront und die Fahrzeugrückseite ausgerichtet sind, um Sensorsignale abzustrahlen und reflektierte Sensorsignale zu empfangen. Aus der Laufzeit des reflektierten Signals bzw. der Phasenverschiebung zwischen dem ausgesendeten und dem empfangenen Signal wird der Abstand zwischen den Sensoren und einem möglichen Hindernis und damit der Abstand zwischen dem Kraftfahrzeug 1 und dem Hindernis bestimmt. Auch an einer linken Fahrzeugseite 6 befindet sich ein Abstandssensor 7, ebenso wie an der rechten Fahrzeugseite 8 ein weiterer Abstandssensor 9. Die Abstandssensoren 7, 9 strahlen jeweils seitlich auf die linke bzw. rechte Seite ihr Messsignal zur Abstandsbestimmung. Die Abstandssensoren 2, 3, 4, 5, 7, 9 können für die Abstandsmessung akustische oder elektromagnetische Wellen ausstrahlen bzw. empfangen. In einem ersten Ausführungsbeispiel werden Ultraschallsensoren verwendet. Es können jedoch auch z.B. Radarsensoren oder Lidarsensoren eingesetzt werden. Über eine Datenleitung 10 werden die ermittelten Abstandswerte an eine Auswerteeinheit 11 übertragen. Die Auswerteeinheit 11 ist mit einer Anzeige 12 und einem Lautsprecher 13 verbunden, über die optische bzw. akustische Signale an einen Fahrzeugführer ausgegeben werden. Ferner ist die Auswerteeinheit 11 in einer bevorzugten Ausführungsform mit einer Radareinheit 14 verbunden, die von der Fahrzeugvorderseite 15 aus nach vorne abstrahlt, um vorausfahrende Fahrzeuge oder Fahrzeuge des Gegenverkehrs zu erfassen. Zur Durchführung des Verfahrens werden die hier gezeigten Sensoren alle aktiviert, wobei sie Abstände zu Hindernissen um das Kraftfahrzeug 1 herum messen. Anhand der an die Auswerteeinheit 11 übermittelten Daten entscheidet die Auswerteeinheit 11, an welcher Seite des Kraftfahrzeugs 1 eine Parklückenvermessung erfolgen soll. Insbesondere wird die Entscheidung zwischen der linken Fahrzeugseite 6 und der rechten Fahrzeugseite 8 getroffen. Entsprechend der Auswahl der Fahrzeugseite werden dann entweder die an der linken Fahrzeugseite 6 angeordneten Abstandssensoren 2, 7, 4 oder die an der rechten Fahrzeugseite 8 angeordneten Abstandssensoren 3, 9, 5 für die Parklückenvermessung angesteuert, so dass die gesamte Rechenkapazität der Auswerteeinheit 11 für die Auswertung der Daten der jeweiligen Sensoren verwendet werden kann.

Zur Aktivierung der Parklückenvermessung ist ferner ein Bedienelement 16 vorgesehen, mit dem die Auswahl der Fahrzeugseite gestartet werden kann. Ergänzend werden auch die von der Radareinheit 14 gelieferten Daten von der Auswerteeinheit 11 insofern verarbeitet, als dass die Radareinheit 14 herannahenden Gegenverkehr erfassen kann. Dieser zeichnet sich dadurch aus, dass er sich mit einer Relativgeschwindigkeit nähert, die größer als die Eigengeschwindigkeit des Kraftfahrzeugs 1 ist, die über einen in der Figur 1 nicht gezeigten Wegstreckensensor oder Raddrehzahlsensor erfasst wird. Mittels der übrigen Sensoren kann mit und/oder nach der Annäherung des Gegenverkehrs entschieden werden, auf welcher der Fahrzeugseiten der Gegenverkehr vorbeifährt. Es ist dabei zu beachten, dass das Fahrzeug sowohl in rechts- als auch in linksgesteuerten Straßensystemen eingesetzt werden kann, so dass die Vorgabe der Fahrzeugseite, an der der Gegenverkehr passieren wird, nicht eindeutig vorbestimmt sein muss. Wird eine Fahrzeugseite ausgewählt, so erfolgt über die Anzeige 12 eine Rückmeldung an den Benutzer, z.B. die Einblendung eines Richtungspfeils, aus der er ersehen kann, an welcher Fahrzeugseite nach einer Parklücke gesucht wird. Zudem kann über den Lautsprecher 13 eine akustische Rückmeldung erfolgen, z.B. in der Form einer Sprachausgabe "Parklückensuche an der rechten Fahrzeugseite".

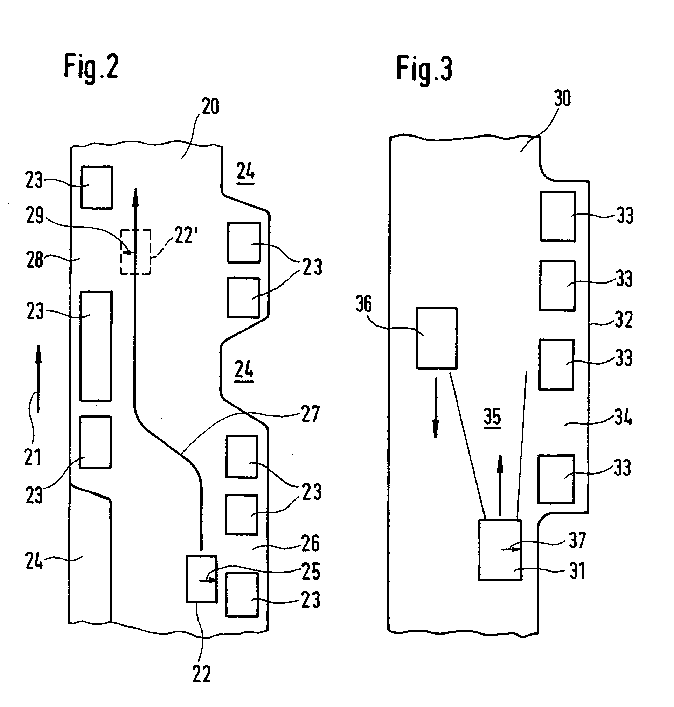

In der Figur 2 ist ein erstes Ausführungsbeispiel für einen Ablauf des erfindungsgemäßen Verfahrens dargestellt. Die Figur 2 zeigt eine Straße 20 in Aufsicht, wobei es sich bei der dem Straße 20 um eine Einbahnstraße handelt, die nur in Pfeilrichtung 21, also gemäß der Figur 2 vom unteren zum oberen Bildrand, befahren werden kann. Ein Kraftfahrzeug 22 ist in den Straße 20 hineingefahren. Sowohl am rechten als auch am linken Rand der Straße 20 sind Fahrzeuge 23 abgestellt und es befmden sich dort Hindernisse 24, die an ihrer Position ein Einparken verhindern. Das Kraftfahrzeug fährt zunächst am rechten Rand der Straße 20, wobei erfindungsgemäß von den Fahrzeugsensoren die rechte Fahrzeugseite als nächste Fahrzeugseite, an der eine Parklückenvermessung erfolgen soll, ausgewählt wird. Dies ist durch einen Pfeil 25 angezeigt. Bei der weiteren Vorbeifahrt detektieren die Abstandssensoren des Kraftfahrzeugs 22 eine Parklücke 26. Die Vermessung ergibt jedoch, dass die Parklücke für das Kraftfahrzeug 22 keine ausreichende Länge aufweist. Das Fahrzeug setzt seine Fahrt anschließend entlang des eingezeichneten Fahrweges 27 fort, wobei die Fahrt zunächst noch auf der rechten Fahrzeugseite entlang führt. Da der Fahrer bereits eine weitere, mögliche Parklücke 28 auf der linken Seite der Straße 20 erahnt, setzt er seine Fahrt auf der linken Fahrzeugseite fort. Erfindungsgemäß wird nun nach einer vorgegebenen, zurückgelegten Wegstrecke, z.B. nach 30 Metern überprüft, ob die zuvor getroffene automatische Seitenauswahl für die Parklückenvermessung noch zutreffend ist. Bei dem hier dargestellten Ausführungsbeispiel wird daher nach dem Wechsel auf die linke Seite der Straße 20 festgestellt, dass die zuvor getroffene Auswahl der rechten Fahrzeugseite für die Parklückenvermessung nicht mehr zutreffend ist. Daher wird auf eine Parklückenvermessung an der linken Fahrzeugseite gewechselt. Das Fahrzeug ist ferner gestrichelt in einer zweiten Position 22' neben der weiteren Parklücke 28 eingezeichnet. Es erfolgt eine Vermessung der weiteren Parklücke 28, wobei eine Ausrichtung der Parklückenvermessung auf die linke Fahrzeugseite durch einen Pfeil 29 verdeutlicht wird. In dem vorliegenden Fall wird die Auswerteeinheit 11 eine hinreichend große Parklücke detektieren und diese Information an den Fahrer ausgeben. Der Fahrer kann nun entscheiden, ob er die vorgeschlagene, weitere Parklücke 28 für einen Einparkvorgang, z.B. durch Rückwärtssetzen in die weitere Parklücke 28 auswählen will. Die Sensoren des Kraftfahrzeugs dienen dabei zur Unterstützung des Fahrers für den Einparkvorgang, indem eine Annäherung an die die weitere Parklücke 28 umgebenden Fahrzeuge 23 stets durch eine Abstandsmessung zu den Fahrzeugen 23 überwacht wird. Gegebenenfalls kann auch ein automatischer Einparkvorgang erfolgen.

In der Figur 3 ist ein weiteres Beispiel für den Ablauf des erfindungsgemäßen Verfahrens dargestellt. In der Figur 3 ist ein Verlauf einer zweiten Straße 30 mit Gegenverkehr dargestellt. In einer Parktasche 32 sind Kraftfahrzeuge 33 abgestellt, die jedoch eine Parklücke 34 freilassen. Ein Kraftfahrzeug 31 bewegt sich entlang der zweiten Straße 30, wobei in einem Strahlkegel 35 einer an der Fahrzeugvorderseite angeordneten, nicht eingezeichneten Radareinheit jedoch ein entgegenkommendes Fahrzeug 36 erfasst wird. Aus der Positionierung des entgegenkommenden Fahrzeugs 36 bestimmt die Auswerteeinheit 11, dass das Fahrzeug an der linken Fahrzeugseite vorbeifahren wird. Daher wird für die Parklückenvermessung die rechte Fahrzeugseite festgelegt, gekennzeichnet durch einen Pfeil 37. Bei der weiteren Vorbeifahrt an den Kraftfahrzeugen 33 wird daher die Parklücke 34 erfasst werden, so dass ein Fahrer auf die möglicherweise geeignete Parklücke über die Anzeige 12 bzw. den Lautsprecher 13 hingewiesen wird.

Wird ein auf die automatische Seitenauswahl folgendes Beschleunigen des Fahrzeugs, ein Blinken in die Gegenrichtung zu der für ein Einparken ausgewählten Fahrzeugseite oder eine starke Lenkbewegung erfasst, die z.B. auf ein Abbiegen zurückzuführen ist, so kann davon ausgegangen werden, dass der Fahrer vorerst nicht mehr einparken will, zumindest jedoch nicht auf der automatisch ausgewählten Fahrzeugseite. Daher kann die automatisch getroffene Seitenauswahl der Fahrtzeugseite für die Parklückenvermessung zurückgesetzt werden, da das Fahrerverhalten im Widerspruch zu der getroffenen Seitenauswahl steht. Eine manuelle Rücksetzung der Seitenauswahl kann somit entfallen. Hieran kann sich eine neue, automatisch durchgeführte Seitenauswahl anschließen.

## Patentansprüche

1. Verfahren zur Ermittlung einer geeigneten Parklücke für ein Fahrzeug (1, 22, 31) **dadurch gekennzeichnet, dass** Sensoren (2, 3, 4, 5, 7, 9) zur Überwachung des Fahrzeugumfelds so ausgewertet werden, dass eine Fahrzeugseite in Abhängigkeit von Messdaten der Sensoren zu einer nachfolgenden Vermessung einer Parklücke (26, 28, 34) an dieser Fahrzeugseite ausgewählt wird.

2. Verfahren nach Anspruch 1, **dadurch gekennzeichnet, dass** der Abstand der linken und der rechten Fahrzeugseite (6, 8) zu einem jeweiligen Straßenrand oder zu Hindernissen am Straßenrand miteinander verglichen wird und dass von den beiden Fahrzeugseiten (6, 8) diejenige Fahrzeugseite für die nachfolgende Parklückenvermessung ausgewählt wird, die einen geringeren Abstand zu dem Straßenrand oder zu Hindernissen an dem Straßenrand aufweist.

3. Verfahren nach einem der vorherigen Ansprüche, **dadurch gekennzeichnet, dass** Gegenverkehr des Fahrzeugs erfasst wird und dass eine Auswahl der Fahrzeugseite, an der der Gegenverkehr an dem Fahrzeug entlang fährt, für eine nachfolgende Parklückenvermessung unterdrückt wird.

4. Verfahren nach einem der vorherigen Ansprüche, **dadurch gekennzeichnet, dass** die Sensoren (2, 3, 4, 5, 7, 9) zur Überwachung des Fahrzeugumfelds für die Auswahl einer Fahrzeugseite über eine Benutzereingabe aktiviert werden.

5. Verfahren nach einem der vorherigen Ansprüche, **dadurch gekennzeichnet, dass** ein Hinweis auf eine Fahrzeugseite, an der eine Parklückenvermessung durchgeführt wird, optisch und/oder akustisch ausgegeben wird.

6. Verfahren nach einem der vorherigen Ansprüche, **dadurch gekennzeichnet, dass** die Parklückenvermessung an der ausgewählten Fahrzeugseite unterbrochen wird, wenn ein vorgegebenes Benutzerverhalten erfasst wird, das im Widerspruch zu einem Einparkwunsch auf der ausgewählten Fahrzeugseite steht.

7. Vorrichtung zur Durchführung des Verfahrens nach einem der vorherigen Ansprüche mit einer Auswerteeinheit (11) zur Auswertung mehrerer Abstandssensoren (2, 3, 4, 5, 7, 9) zur Überwachung des Fahrzeugumfelds für die Auswahl einer Fahrzeugseite (6, 8) zur Parklückenvermessung und zur Bestimmung der Abmessung der Parklücke.

## Claims

1. Method for identifying a suitable parking space for a vehicle (1, 22, 31), **characterized in that** sensors (2, 3, 4, 5, 7, 9) for monitoring the surroundings of the vehicle are evaluated in such a way that one side of the vehicle is selected as a function of measurement data of the sensors for a subsequent measurement of a parking space (26, 28, 34) on this side of the vehicle.

2. Method according to Claim 1, **characterized in that** the distance of the left-hand side (6) and right-hand side (8) of the vehicle from a respective edge of the road or from obstacles at the edge of the road are compared with one another, and **in that** of the two sides (6, 8) of the vehicle that side of the vehicle which is at a smaller distance from the edge of the road or from obstacles at the edge of the road is selected for the subsequent measurement of the parking space.

3. Method according to one of the preceding claims, **characterized in that** oncoming traffic of the vehicle is sensed, and **in that** a selection of the side of the vehicle on which the oncoming traffic travels past the vehicle is suppressed for a subsequent measurement of the parking space.

4. Method according to one of the preceding claims, **characterized in that** the sensors (2, 3, 4, 5, 7, 9) for monitoring the surroundings of the vehicle for the selection of one side of the vehicle are activated by means of a user input.

5. Method according to one of the preceding claims, **characterized in that** an indication of a side of the vehicle at which a measurement of a parking space is carried out is output visually and/or audibly.

6. Method according to one of the preceding claims, **characterized in that** the measurement of a parking space on the selected side of a vehicle is interrupted if a predefined user behaviour is sensed which contradicts a parking request on the selected side of the vehicle.

7. Device for carrying out the method according to one of the preceding claims, having an evaluation unit (11) for evaluating a plurality of distance sensors (2, 3, 4, 5, 7, 9) for monitoring the surroundings of the vehicle for selecting one side (6, 8) of the vehicle for measuring the parking space and for determining the dimensions of the parking space.

## Revendications

1. Procédé d'identification d'une place adéquate de stationnement pour un véhicule (1, 22, 31),
**caractérisé en ce qu'**
on exploite des capteurs (2, 3, 4, 5, 7, 9) destinés à la surveillance de l'environnement du véhicule de telle sorte qu'on choisit un côté du véhicule en fonction de données de mesure des capteurs pour mesurer subséquemment une place de stationnement (26, 28, 34) de ce côté-ci du véhicule.

2. Procédé selon la revendication 1,
**caractérisé en ce qu'**
on remplace la distance du côté gauche et du côté droit (6, 8) du véhicule par rapport au bord de la chaussée respectif ou aux obstacles présents sur le bord de la chaussée et, pour la mesure subséquente de la place de stationnement, on choisit parmi les deux côtés (6, 8) du véhicule celui qui présente l'écart le plus faible par rapport au bord de la chaussée ou aux obstacles présents sur le bord de la chaussée.

3. Procédé selon l'une des revendications précédentes,
**caractérisé en ce que**
la circulation en sens inverse du véhicule est détectée et le choix du côté du véhicule tourné vers la circulation inverse est invalidé pour la mesure subséquente de la place de stationnement.

4. Procédé selon l'une des revendications précédentes,
**caractérisé en ce que**
les capteurs (2, 3, 4, 5, 7, 9) destinés à la surveillance de l'environnement du véhicule sont activés sur commande de l'utilisateur pour choisir un côté du véhicule.

5. Procédé selon l'une des revendications précédentes,
**caractérisé en ce qu'**
on donne un signalement optique et/ou acoustique du côté du véhicule ou on effectue la mesure de la place de stationnement.

6. Procédé selon l'une des revendications précédentes,
**caractérisé en ce que**
la mesure de la place de stationnement du côté choisi du véhicule est interrompue lorsqu'on saisit un comportement prédéterminé de l'utilisateur indiquant le refus de stationner du côté choisi.

7. Dispositif de mise en oeuvre du procédé selon l'une des revendications précédentes, comportant une unité d'exploitation (11) pour l'exploitation de plusieurs capteurs de distance (2, 3, 4, 5, 7, 9) destinés à surveiller l'environnement du véhicule pour permettre le choix du côté (6, 8) du véhicule pour la mesure d'une place de stationnement et la détermination des dimensions de la place de stationnement.
